(19) Europäisches Patentamt
European Patent Office
Office européen des brevets

(11) **EP 4 570 395 A1**

(12) **EUROPEAN PATENT APPLICATION**
published in accordance with Art. 153(4) EPC

(43) Date of publication:
**18.06.2025 Bulletin 2025/25**

(21) Application number: 24855086.5

(22) Date of filing: **30.09.2024**

(51) International Patent Classification (IPC):
**B09B 3/70** (2022.01)       **B09B 3/40** (2022.01)
**B09B 3/80** (2022.01)       **C04B 7/38** (2006.01)
**B09B 101/30** (2022.01)

(52) Cooperative Patent Classification (CPC):
**B09B 3/40; B09B 3/70; B09B 3/80; C04B 7/38;**
B09B 2101/30

(86) International application number:
**PCT/JP2024/034871**

(87) International publication number:
**WO 2025/079446 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2023 JP 2023175998**

(71) Applicant: **Tokuyama Corporation
Shunan-shi, Yamaguchi 745-8648 (JP)**

(72) Inventors:
• **MORIMOTO, Tetsuro
Shunan-shi, Yamaguchi 745-8648 (JP)**
• **OMURA, Kohei
Shunan-shi, Yamaguchi 745-8648 (JP)**

(74) Representative: **TBK
Bavariaring 4-6
80336 München (DE)**

(54) **PRODUCTION METHOD FOR MODIFIED WOODY BIOMASS ASH**

(57) It is a method for reducing alkali metal from a predetermined woody biomass ash, simply and efficiently. Specifically, a method of heat treating woody biomass ash having a pH of 12.5 or more in water, at ordinary pressure, at 60 to 100 °C.

EP 4 570 395 A1

**Description**

TECHNICAL FIELD

The present invention relates to a method for producing a modified woody biomass with reduced alkali metal.

BACKGROUND ART

Traditionally, coal ash generated at coal fired power generation has been used as a cement raw material.

On the other hand, recently, as a trend toward carbon neutral, biomass electric generation of burning biomass fuel including wood chip, palm kernel shell (PKS) is actively performed, and it is considered to use the burned ash generated by burning biomass in cement raw material.

However, this biomass fuel has generally a large content of alkali metal, particularly potassium, as compared to coal, though the content differs by the type or area of production. Since the alkali metal such as potassium, etc. becomes a factor of alkali-aggregate reaction, in the cement production, the content is strictly stipulated by product standards, and the actual state is that it is difficult to use biomass burned ash (biomass ash) as it is.

Under such situation, methods of reducing alkali metal from biomass ash are proposed. For example, a method of removing alkali metal from fly ash of ash of woody biomass, comprising a step (a) of classifying fly ash into fine powder and coarse powder; a step (b) of crushing the surface part of coarse powder obtained in step (a) to obtain a crushed material; a step (c) of classifying the crushed material obtained in step (b) into crushed fine powder and crushed coarse powder; a step (d) of heating the crushed fine powder obtained in step (c) with chlorine source to obtain a heat treated material; and a step (e) of washing the fine powder obtained in step (a) and the heated treated material obtained in step (d) with water (see Patent Literature 1).

Further, a method of producing low potassium woody biomass ash, comprising a first step of heating woody biomass ash to 500 to 850°C, and contacting the woody biomass ash with gas containing hydrogen chloride, and a second step of washing the woody biomass ash after contact with water, to remove soluble matter (see Patent Literature 2).

Further, a method of washing biomass burned ash, comprising a water washing step of subjecting biomass burned ash comprising alkali containing mineral to water washing treatment using water comprising carbon dioxide (see Patent Literature 3).

However, the operation of these methods is complex, and a method for reducing alkali metal more simply and efficiently is awaited. If it would be possible to reduce alkali metal from biomass ash more simply and efficiently, it would be possible to readily expand the usage to cement raw material, similarly as coal ash.

CITATION LIST

Patent Literature

[Patent Literature 1] Japanese Patent Application Laid-Open Publication No. 2021-146236
[Patent Literature 2] Japanese Patent Application Laid-Open Publication No. 2021-104482
[Patent Literature 3] Japanese Patent Application Laid-Open Publication No. 2020-158321

SUMMARY OF THE INVENTION

TECHNICAL PROBLEM

The object of the present invention is to provide a method for reducing alkali metal from a predetermined woody biomass ash simply and efficiently.

SOLUTION TO PROBLEM

The present inventors made a keen study to solve the above-mentioned object, and they have found that by simply performing heating treatment in water to biomass ash having a particular pH or more, alkali metal can be effectively reduced. The present invention has been thus completed.

Specifically, the present invention is as follows.

[1] A method for producing a modified woody biomass ash, comprising heat treating woody biomass ash having a pH of 12.5 or more in water at 60 to 100°C.

[2] The method for producing a modified woody biomass ash according to the above [1], wherein a total alkali amount ($R_2O$) of the woody biomass ash calculated by the following formula is 4.0% by mass or more.

$$\text{Total alkali amount } (R_2O) = Na_2O \text{ amount} + 0.658 \times K_2O \text{ amount}$$

[3] The method for producing a modified woody biomass ash according to the above [1], wherein the woody biomass ash has a mass ratio of alkali metal amount with respect to calcium amount (($Na_2O+K_2O$)/CaO) of 0.3 or more.

[4] The method for producing a modified woody biomass ash according to the above [2], wherein the woody biomass ash has a mass ratio of alkali metal amount with respect to calcium amount (($Na_2O+K_2O$)/CaO) of 0.3 or more.

[5] A method for producing cement, comprising using the modified woody biomass ash produced by the production method according to any one of the above [1] to [4], as a part of raw material.

[6] A method for modifying biomass ash, comprising heat treating woody biomass ash having a pH of 12.5 or more in water at 60 to 100°C.

ADVANTAGEOUS EFFECTS OF INVENTION

According to the method of the present invention, it is possible to reduce alkali metal from a predetermined woody biomass ash simply and effectively.

DESCRIPTION OF EMBODIMENTS

[Method for producing a modified woody biomass ash and method for modifying woody biomass ash]

The method for producing a modified woody biomass ash and the method for modifying woody biomass ash of the present invention are characterized by heat treating woody biomass ash having a pH of 12.5 or more in water at 60 to 100°C.

Alkali metal such as sodium, potassium, etc. in woody biomass ash is thought to be present mainly in amorphous hyaline (aluminosilicate structure), and commonly, cannot be reduced even by performing washing treatment with water or hot water. However, for woody biomass ash having a pH of 12.5 or more, by merely performing heating treatment in water at 60 to 100°C as stated above, alkali metal can be reduced. The reduction rate is, for example 40% or more, and preferably 50% or more.

The mechanism of such action effect of the present invention occurs is thought to be as follows.

In woody biomass ash, free lime (CaO) is present, and this free lime is estimated to be present as calcium hydroxide in woody biomass ash slurry. The pH of saturated calcium hydroxide aqueous solution is generally about 12.4. Therefore, it is thought that in woody biomass ash slurry having a pH or 12.5 or more of the present invention, sodium hydroxide or potassium hydroxide, etc. is present other than calcium hydroxide generated from free lime. Therefore, by performing heating treatment in the presence of these calcium hydroxide, sodium hydroxide, or potassium hydroxide, aluminosilicate structure which is the main component of woody biomass ash is destructed, alkali metal is dissolved in water, and alkali metal is removed from woody biomass ash.

Further, since the method of the present invention exerts a sufficient effect with a common heating treatment of about 60 to 100°C, consumption energy is low, which lead to low cost and $CO_2$ emission reduction.

As woody biomass ash being the subject of treatment in the method of the present invention (hereinafter referred to as woody biomass ash of the present invention), specific examples include those having burned woody source, such as waste wood, palm kernel shell (PKS), white pellet, black pellet, empty fruits bunch (EFB), etc. In woody biomass ash, other burned ash, etc. can be contained within a range that does not inhibit the effect of the present invention.

The woody biomass ash of the present invention has, as stated above, a pH or 12.5 or more, but it is preferable to have a pH of 13.0 or more. The pH relates to a pH of the slurry made by adding water to the woody biomass ash of the present invention, and more specifically, it is related to for example, a pH of the slurry prepared by adding 3 fold amount of water by mass ratio with respect to the woody biomass ash.

Further, for the woody biomass ash of the present invention, it is preferable that the total alkali amount ($R_2O$) is 4.0% by mass or more, more preferably 4.5% by mass or more, and most preferably 5.0% by mass or more. By heating in water a woody biomass ash showing a high level of total alkali amount, a larger amount of alkali metal can be removed.

The total alkali amount ($R_2O$) is a corresponding value showing a total alkali amount defined in JIS standard of cement, which is calculated by the following formula.

$$\text{Total alkali amount } (R_2O) = Na_2O \text{ amount} + 0.658 \times K_2O \text{ amount}$$

It is preferable that the woody biomass ash of the present invention has a mass ratio of alkali metal amount with respect to calcium amount $((Na_2O+K_2O)/CaO)$ of 0.3 or more, more preferably 0.35 or more, and furthermore preferably 0.38 or more.

In woody biomass ash, larger the alkali metal amount with respect to calcium amount is, alkali metal can be more reduced. It is thought that this is because while in amorphous material in woody biomass ash, various aluminosilicate compounds having different calcium amount and alkali amount are present, particularly aluminosilicate comprising a large amount of alkali metal with respect to calcium can be easily dissolved in water.

The total alkali amount in woody biomass ash $(R_2O)$, and the mass ratio of alkali metal amount with respect to calcium amount in woody biomass ash $((Na_2O+K_2O)/CaO)$ can be obtained by a method based on JIS R 5204 "Chemical analysis method of cement by X-ray fluorescence".

The heating temperature in the heating treatment in water of the method of the present invention is 60 to 100°C, more preferably 70 to 100°C, furthermore preferably 80 to 100°C, and particularly preferably 100°C. In case of performing the treatment at 100°C, it can be heated by supplementing water which has been evaporated, while from the viewpoint of effective use of energy, it is preferable to employ a reflux method of connecting the reaction vessel to a heat exchanger, and returning the evaporative water to the reaction vessel. Note that as a pressurized state, it can be heated from over 100°C to about 200°C.

Further, the heating time is preferably 1 to 24 hours, more preferably 2 to 12 hours, and furthermore preferably 3 to 8 hours.

The heating method is not particularly limited as long as it is a method that can heat to a desired temperature, and for example, heating method by electricity, heating oil, vapor, etc. can be exemplified, and direct heating method of vapor is preferable.

Further, heating treatment is preferably performed while stirring, and as a stirring method, it can be a method that can uniformly mix the treated slurry, and a general stirrer can be used.

The method for producing a modified woody biomass ash and the method for modifying woody biomass ash of the present invention specifically comprise, for example, a mixing step of mixing woody biomass ash and water, a heating step of performing heating treatment to the mixture, and a filtration-water washing step of filtering and washing the treated ash. Since the heating step, an important step of the present invention, has been described in the above, the treatment of the mixing step, and the filtration -water washing step are explained in the following.

(Mixing step)

The mixing mass ratio of the woody biomass ash and water (woody biomass ash : water) is preferably within the range of 1:1.0 to 10.0, more preferably within the range of 1:1.0 to 5.0, and furthermore preferably within the range of 1:2.0 to 5.0. Being within this range, woody biomass ash is sufficiently mixed with water, the amount of water is not excessive, and it is possible to prevent unnecessary use of heat energy. Note that at that time, alkali earth components such as calcium hydroxide, calcium oxide, etc. can be added.

(Filtration - washing step)

The filtration - washing step is a step of filtrating and washing woody biomass ash that has been heat treated in water during the heating step. As filtration method, an arbitrary method can be employed, and for example methods of using filter press, belt filter, drum filter, etc. can be exemplified. Further, as filtration temperature, since the dissolved sodium, potassium compounds (NaCl, KCl, NaOH, KOH) have a high degree of solubility, the solubility does not largely change even by changing the water temperature, and an arbitrary temperature can be used. As liquid to use for washing, industrial water, tap water, distilled water, ion exchange water, etc. can be used, and it is preferable to use 3 fold amount or more, and more preferable to use 5 fold amount or more by mass ratio with respect to woody biomass ash. The temperature of washing water can be an arbitrary temperature, for the above reason.

[Method for producing cement]

The modified woody biomass ash produced by the method of the present invention can be used as a part of cement material. Specifically, the method for producing cement of the present invention is a method for producing cement, by using the modified woody biomass ash produced by the production method of the present invention as a part of raw material. Specifically, for example, a method for producing cement, by using cement clinker produced by using a modified woody biomass ash, or a method for producing cement, by using a modified biomass ash as an admixture, together with cement clinker, etc. can be exemplified.

Examples

[Example 1]

To a 500 mL-three neck flak, 100 g of woody biomass ash (burned ash 1 to 3) and 300 g of ion exchange water were weighed. The composition, etc. of the raw material used, woody biomass ash, was analyzed by a method based on JIS R 5204 "Chemical analysis method of cement by X-ray fluorescence". The analysis results are shown in Table 1.

[Table 1]

| | burned ash slurry pH | ash component (wt%) | | | | | | ash R2O (%) | (Na2O+K2O)/Ca |
|---|---|---|---|---|---|---|---|---|---|
| | | SiO2 | CaO | Na2O | K2O | C1 | SO3 | | |
| burned ash 1 | 12.7 | 43.0 | 24.6 | 1.3 | 8.0 | 2.0 | 7.9 | 6.56 | 0.38 |
| burned ash 2 | 13 | 29.2 | 33.4 | 3.8 | 14.1 | 3.9 | 8.8 | 13.08 | 0.54 |
| burned ash 3 | 11.7 | 43.0 | 13.3 | 0.2 | 2.4 | 0.6 | 5.0 | 1.78 | 0.20 |

Allihn condenser in which cooling water adjusted at 25°C has passed through with a circulating cooling water system, a thermometer (0 to 100°C mercury thermometer) and stirring blades made by PTFE connected to the stirrer (Three-One motor) were connected to the three neck flask, and stirred at 200 rpm. The three neck flask was heated with a mantle heater, and after reaching a predetermined temperature, it was maintained for a predetermined time (reaction time). Then, the mantle heater was removed from the flask, to terminate the heating. After confirming that it became 40°C or less, stirring with a stirrer was stopped, and the slurry in the flask was subjected to suction filtration (filter paper manufactured by ADVANTEC, 5B), to filter solid content. The filtered solid content was washed with water using 500 mL of ion exchange water to obtain a modified woody biomass ash.
The reaction conditions (reaction temperature, reaction time) and analysis results of the modified woody biomass ash (performed by a method based on JIS R 5204 "Chemical analysis method of cement by X-ray fluorescence") are shown in Table 2.

[Table 2]

| | ash | reaction temperature (°C) | reaction time (h) | modified ash component (wt%) | | | | | | alkali/Ca ratio | modified ash R2O (%) | R2O reduction rate (%) |
|---|---|---|---|---|---|---|---|---|---|---|---|---|
| | | | | SiO2 | CaO | Na2O | K2O | Cl | SO3 | | | |
| Example 1 | burned ash 1 | 100 | 6 | 47.5 | 27.2 | 0.5 | 4.0 | 0.0 | 4.0 | 0.17 | 3.13 | 52.3 |
| Example 2 | burned ash 2 | 100 | 6 | 30.4 | 38.6 | 1.3 | 4.1 | 0.1 | 2.9 | 0.14 | 4.00 | 69.0 |
| Example 3 | burned ash 1 | 80 | 6 | 46.7 | 25.1 | 0.6 | 4.5 | 0.0 | 4.5 | 0.20 | 3.58 | 45.6 |
| Example 4 | burned ash 1 | 100 | 3 | 47.3 | 26.2 | 0.6 | 4.2 | 0.0 | 4.5 | 0.18 | 3.36 | 48.5 |
| Example 5 | burned ash 1 | 100 | 1 | 46.9 | 26.2 | 0.6 | 4.3 | 0.0 | 4.6 | 0.19 | 3.43 | 48.5 |
| Comparative Example 1 | burned ash 1 | room temperature | 6 | 47.3 | 21.1 | 1.0 | 5.7 | 0.0 | 5.4 | 0.32 | 4.75 | 27.2 |
| Comparative Example 2 | burned ash 3 | 100 | 6 | 42.5 | 13.6 | 0.2 | 2.2 | 0.0 | 4.0 | 0.18 | 1.65 | 11.1 |

As shown in Table 2, with the method of Examples 1 to 5 of the present invention, content of potassium ($K_2O$), content of sodium ($Na_2O$), and total alkali amount ($R_2O$) could be effectively reduced. Particularly, with ash having a large amount of alkali (total amount of sodium + potassium) with respect to calcium of Example 2 (ash with high alkali/Ca ratio), the reduced amount of alkali was large. Since according to the method of the present invention, alkali/Ca ratio can be reduced to about 0.2, it is particularly effective to woody biomass which alkali/Ca ratio is 0.3 or more. Further, converted in amount of material, alkali amount was reduced more than chlorine amount and sulfur amount.

On the other hand, in Comparative Example 1 in which heating treatment was not performed, reduction of alkali could not be observed much, and $R_2O$ reduction rate was low, being 27.2%. Further, in Comparative Example 2, using woody biomass ash originally having a low pH, even by applying the method of the present invention, the effect was limited.

INDUSTRIAL APPLICABILITY

Since the modified woody biomass ash produced by the method of the present invention can be used as cement material, etc., the present invention is industrially applicable.

**Claims**

1. A method for producing a modified woody biomass ash with reduced alkali metal, comprising heat treating woody biomass ash having a pH of 12.5 or more in water, at ordinary pressure, at 60 to 100°C.

2. The method for producing a modified woody biomass ash with reduced alkali metal according to claim 1, wherein a total alkali amount ($R_2O$) of the woody biomass ash calculated by the following formula is 4.0% by mass or more.

$$\text{Total alkali amount } (R_2O) = Na_2O \text{ amount} + 0.658 \times K_2O \text{ amount}$$

3. The method for producing a modified woody biomass ash with reduced alkali metal according claim 1, wherein the woody biomass ash has a mass ratio of alkali metal amount with respect to calcium amount (($Na_2O+K_2O$)/CaO) of 0.3 or more.

4. The method for producing a modified woody biomass ash with reduced alkali metal according claim 2, wherein the woody biomass ash has a mass ratio of alkali metal amount with respect to calcium amount (($Na_2O+K_2O$)/CaO) of 0.3 or more.

5. A method for producing cement, comprising using the modified woody biomass ash produced by the production method according to any one of claims 1 to 4, as a part of raw material.

6. A method for modifying biomass ash, comprising heat treating woody biomass ash having a pH of 12.5 or more in water, at ordinary pressure, at 60 to 100°C, to reduce alkali metal in the woody biomass ash.

## INTERNATIONAL SEARCH REPORT

| | International application No. |
|---|---|
| | **PCT/JP2024/034871** |

**A. CLASSIFICATION OF SUBJECT MATTER**

*B09B 3/70*(2022.01)i; *B09B 3/40*(2022.01)i; *B09B 3/80*(2022.01)i; *C04B 7/38*(2006.01)i; *B09B 101/30*(2022.01)n
FI: B09B3/70; B09B3/80; B09B3/40; C04B7/38; B09B101:30

According to International Patent Classification (IPC) or to both national classification and IPC

**B. FIELDS SEARCHED**

Minimum documentation searched (classification system followed by classification symbols)

B09B3/70; B09B3/40; B09B3/80; C04B7/38; B09B101/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-208276 A (KAWASAKI JUKOGYO KABUSHIKI KAISHA) 12 August 1997 (1997-08-12)<br>    entire text, all drawings | 1-6 |
| A | JP 2008-247642 A (TOCHIGI PREFECTURE) 16 October 2008 (2008-10-16)<br>    entire text, all drawings | 1-6 |
| A | JP 2020-158321 A (SUMITOMO OSAKA CEMENT CO., LTD.) 01 October 2020 (2020-10-01)<br>    entire text, all drawings | 1-6 |
| A | JP 2006-181535 A (OJI PAPER CO., LTD.) 13 July 2006 (2006-07-13)<br>    entire text, all drawings | 1-6 |
| A | JP 2019-089040 A (UNIV OF KITAKYUSHU) 13 June 2019 (2019-06-13)<br>    entire text, all drawings | 1-6 |

☑ Further documents are listed in the continuation of Box C.          ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 570 395 A1

## INTERNATIONAL SEARCH REPORT

| | International application No. |
|---|---|
| | **PCT/JP2024/034871** |

### C. DOCUMENTS CONSIDERED TO BE RELEVANT

| Category* | Citation of document, with indication, where appropriate, of the relevant passages | Relevant to claim No. |
|---|---|---|
| A | JP 2018-069108 A (CHUBU RECYCLE CO., LTD) 10 May 2018 (2018-05-10) entire text, all drawings | 1-6 |
| A | JP 10-128272 A (KOMATSU LTD.) 19 May 1998 (1998-05-19) entire text, all drawings | 1-6 |
| A | JP 2023-095082 A (TOKUYAMA CORPORATION) 06 July 2023 (2023-07-06) entire text, all drawings | 1-6 |
| A | JP 2022-135387 A (TAIHEIYO CEMENT CORPORATION) 15 September 2022 (2022-09-15) entire text, all drawings | 1-6 |

Form PCT/ISA/210 (second sheet) (July 2022)

9

**INTERNATIONAL SEARCH REPORT**
**Information on patent family members**

International application No.

**PCT/JP2024/034871**

| Patent document cited in search report | | | Publication date (day/month/year) | Patent family member(s) | | | Publication date (day/month/year) |
|---|---|---|---|---|---|---|---|
| JP | 9-208276 | A | 12 August 1997 | (Family: none) | | | |
| JP | 2008-247642 | A | 16 October 2008 | (Family: none) | | | |
| JP | 2020-158321 | A | 01 October 2020 | (Family: none) | | | |
| JP | 2006-181535 | A | 13 July 2006 | CN | 1796014 | A | |
| JP | 2019-089040 | A | 13 June 2019 | (Family: none) | | | |
| JP | 2018-069108 | A | 10 May 2018 | (Family: none) | | | |
| JP | 10-128272 | A | 19 May 1998 | (Family: none) | | | |
| JP | 2023-095082 | A | 06 July 2023 | (Family: none) | | | |
| JP | 2022-135387 | A | 15 September 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021146236 A
- JP 2021104482 A

- JP 2020158321 A